# EUROPÄISCHE PATENTANMELDUNG

(11) **EP 1 306 291 A2**
(43) Veröffentlichungstag der Anmeldung: **02.05.2003**
(21) Anmeldenummer: 02021615.6
(22) Anmeldetag: 27.09.2002
(51) Int. Cl.: B62D 25/04

(54) **Karosseriesäule für einen Kraftwagen**

(30) Priorität: 11.10.2001 DE 10149988
(71) Anmelder: DaimlerChrysler AG, 70567 Stuttgart (DE)
(72) Erfinder: Braitmaier, Klaus, 71083 Herrenberg (DE); Joerg, Roland, 72108 Rottenburg (DE)

(57) **Zusammenfassung**

Die Erfindung betrifft eine Karosseriesäule für einen Kraftwagen, die aus mehreren Profilschalen zu einer Hohlsäule (15) zusammengesetzt ist, die einen Wandsäulenabschnitt (18) und einen hierzu abgewinkelten Dachsäulenabschnitt (20) umfasst, wobei innerhalb der Hohlsäule ein Verstärkungsrohr (22) befestigt ist, welches sich in Längsrichtung des Dachsäulenabschnitts bis in den Wandsäulenabschnitt hinein erstreckt.
Das Verstärkungsrohr (22) im Übergangsbereich zwischen Dachsäulenabschnitt und Wandsäulenabschnitt ist durch ein Ende einer Strebe (26) abgestützt, die in Höhenrichtung des Wandsäulenabschnittes verläuft und mit dem Verstärkungsrohr (22) einen Stützwinkel einschließt.

## Beschreibung

Die Erfindung betrifft eine Karosseriesäule für einen Kraftwagen nach dem Oberbegriff des Patentanspruchs 1.

Vom Mercedes-Benz Typ SL (R129) ist bereits eine A-Säule für einen offenen Kraftwagen bekannt, die aus einer inneren und einer äußeren Profilschale zu einer Hohlsäule zusammengesetzt ist. Dabei umfasst die A-Säule einen Wandsäulenabschnitt und einen hierzu abgewinkelten Dachsäulenabschnitt, wobei zur Vermeidung eines Einknickens des Dachsäulenabschnitts bei einem Überschlag des Kraftwagens innerhalb der Hohlsäule ein Verstärkungsrohr befestigt ist, welches sich in Längsrichtung des Dachsäulenabschnitts bis in den Wandsäulenabschnitt hinein erstreckt.

Der Erfindung liegt die Aufgabe zugrunde, eine Karosseriesäule für einen Kraftwagen der eingangs genannten Art zu schaffen, bei der ein Einknicken des Dachsäulenabschnitts bei einem Überschlag des Kraftwagens zuverlässig vermieden werden kann.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist das Verstärkungsrohr im abgewinkelten Übergangsbereich zwischen Dachsäulenabschnitt und Wandsäulenabschnitt zusätzlich durch ein Ende einer Strebe abgestützt, wodurch bei einem Überschlag ein Einknicken insbesondere am unteren Ende des Dachsäulenabschnitts besonders zuverlässig vermieden werden kann. Da die Strebe in Höhenrichtung des Wandsäulenabschnittes verläuft, ist diese besonders gut zur Aufnahme einer von oben wirkenden Aufprallkraft bei einem Überschlag des Kraftwagens geeignet.

Ein besonders guter Verbund zwischen Verstärkungsrohr und Strebe ist durch eine Verstärkung geschaffen, durch welche die beiden Profile miteinander verbunden sind. Dabei haben sich zwei Verstärkungsschalen, deren Enden formschlüssig mit dem Umfang des zugeordneten Rohrs verbunden sind, als besonders vorteilhaft gezeigt. Diese Baueinheit kann auf einfache Weise vormontiert und dann an den Profilschalen befestigt werden, bevor diese zu der Hohlsäule zusammengesetzt werden.

Die Strebe kann mit ihrem einen Ende besonders weit oben in einem zentralen Bereich des Verstärkungsrohres befestigt werden, wenn diese zwischen annähernd geraden Endbereichen leicht gekrümmt verläuft. Die Krümmung der Strebe ist dabei im Überdeckungsbereich mit der Verstärkung vorgesehen, um die Stabilität der Strebe in diesem Bereich zu erhöhen.

Das Verstärkungsrohr und die Strebe sind bevorzugt aus jeweils aus einem hochfesten Stahlrohr hergestellt, wobei das Verstärkungsrohr, die Strebe und die Verstärkung vorzugsweise ein dreieckförmiges Stabwerk bilden. Durch diese Maßnahmen wird bei einem Überschlag des Kraftwagens eine geringere Deformation der Säule, ein homogenes Deformationsbild der Säule ohne ein Einknicken sowie ein dynamisches Wiederaufstellen der Säule bei nachlassender Belastung erreicht.

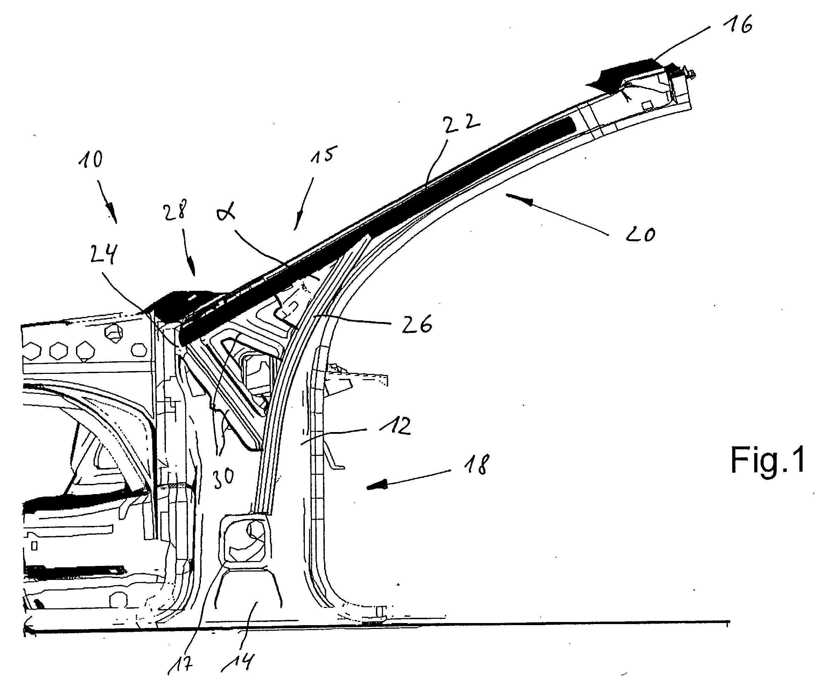

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigen in
- Fig. 1: eine schematische Seitenansicht auf eine innere Seitenwandschale eines offenen Kraftwag.ens mit einer inneren Profilschale einer A-Säule, in deren Hohlraum ein durch eine Strebe gestütztes Verstärkungsrohr angeordnet ist.

In der einzigen Zeichnung ist in schematischer Seitenansicht eine innere Seitenwandschale 10 eines offenen Kraftwagens, bspw. eines Roadsters oder Cabriolets von etwa einem vorderen Radlauf bis etwa zur Fahrzeugmitte dargestellt. Der inneren Seitenwandschale 10 ist die innere Profilschale 12 einer A-Säule zugeordnet. Mittels eines hier der Übersichtlichkeit halber nicht gezeigten, einer äußeren Seitenwandschale zugeordneten äußeren Profilschale der A-Säule kann diese zu einer Hohlsäule 15 zusammengesetzt werden. Die A-Säule erstreckt sich dabei von einer Säulenwurzel 14 im Bereich des Wagenbodens bis zu einem oberen Querträger 16 des Windschutzscheibenrahmens. Die Hohlsäule 15 umfasst dabei einen sich von der Säulenwurzel 14 bis etwa auf Höhe der Bordwandoberkante erstreckenden Wandsäulenabschnitt 18 und einen hierzu abgewinkelten Dachsäulenabschnitt 20, der sich von der Bordwandoberkante bis auf Höhe der Dachoberseite erstreckt. Innerhalb der Hohlsäule 15 ist ein Verstärkungsrohr 22 befestigt, welches sich in Längsrichtung des Dachsäulenabschnitts 20 bis in den Wandsäulenabschnitt 18 hinein erstreckt und an einer vorderen Wand 24 des Wandsäulenabschnitts 18 endet bzw. sich abstützt. Im Übergangsbereich zwischen Dachsäulenabschnitt 20 und Wandsäulenabschnitt 18 der Hohlsäule 15 ist das Verstärkungsrohr 22 durch ein Ende einer Strebe 26 abgestützt, die in Höhenrichtung des Wandsäulenabschnittes 18 verläuft und mit dem Verstärkungsrohr 22 einen Stützwinkel ∝ einschließt. Der Stützwinkel ∝ beträgt hier etwa 30° und kann je nach Konstruktionsweise vorzugsweise zwischen 15° und 80° variieren. An ihrem unteren Ende erstreckt sich die Strebe 26 bis in die Säulenwurzel 14 und ist auf einer Konsole 17, einem Querträger oder dgl. abgestützt. Sowohl das Verstärkungsrohr 22 wie auch die Strebe 26 weisen hier einen ringförmigen Querschnitt auf, wenngleich ovale oder eckige Querschnitte ebenfalls denkbar wären. Um bei einem Überschlag des Kraftwagens eine geringere Deformation der Hohlsäule 15, ein homogenes Deformationsbild ohne ein Einknicken sowie ein dynamisches Wiederaufstellen der Säule 15 bei nachlassender Belastung zu erreichen, ist das Verstärkungsrohr 22 und die Strebe 26 jeweils aus einem hochfesten Stahlrohr hergestellt. Das Ende der Strebe 26 ist hier etwa in der Mitte des Verstärkungsrohres 22 befestigt. Hierzu weist die Strebe 26 zwischen zumindest annähernd geraden Endbereichen im Übergangsbereich zwischen Dachsäulenabschnitt 20 und Wandsäulenabschnitt 18 eine leicht Krümmung auf. Zwischen dieser Krümmung der Strebe 26 und dem vorderen Ende des Verstärkungsrohres 22 ist eine Verstärkung im Form von zwei Verstärkungsschalen 30 aus Blech vorgesehen, welche außenseitig an den Rohren 22,26 befestigt werden und von denen lediglich die innere Verstärkungsschale 30 dargestellt ist. Das Verstärkungsrohr 22, die Strebe 26 und die Verstärkung 28 bilden dabei ein dreieckförmiges Stabwerk. Um einen äußerst steifen Verbund zwischen Verstärkungsrohr 22 und Strebe 26 zu erreichen, sind die Enden der Verstärkungsschalen 30 formschlüssig mit dem Umfang des jeweils zugeordneten Rohrs 22,26 verbunden. Die Strebe 26, das Verstärkungsrohr 22 und die Verstärkung 28 sind dabei zu einer vormontierten Baueinheit miteinander verschweißt, welche dann an den Profilschalen 12 der Hohlsäule 15 bspw. ebenfalls durch Schweißverbindungen oder dgl. befestigt wird.

Die hier gezeigte Verstärkung der A-Säule kann selbstverständlich auch bei einer hinteren Dachsäule, bspw. der C-Säule eingesetzt werden. Durch die Verstärkung wird zudem erreicht, dass zumindest teilweise auf Verstärkungsmaßnahmen der Hohlsäule im Bereich der Scharnierung einer Fahrzeugtür verzichtet werden kann.

## Patentansprüche

1. Karosseriesäule für einen Kraftwagen, die aus mehreren Profilschalen (12) zu einer Hohlsäule (15) zusammengesetzt ist, die einen Wandsäulenabschnitt (18) und einen hierzu abgewinkelten Dachsäulenabschnitt (20) umfasst, wobei innerhalb der Hohlsäule (15) ein Verstärkungsrohr (22) befestigt ist, welches sich in Längsrichtung des Dachsäulenabschnitts (20) bis in den Wandsäulenabschnitt (18) hinein erstreckt,
**dadurch gekennzeichnet,**
**dass** das Verstärkungsrohr (22) im Übergangsbereich zwischen Dachsäulenabschnitt (20) und Wandsäulenabschnitt (18) durch ein Ende einer Strebe (26) abgestützt ist, die in Höhenrichtung des Wandsäulenabschnittes (18) verläuft und mit dem Verstärkungsrohr (22) einen Stützwinkel (∝) einschließt.

2. Karosseriesäule nach Anspruch 1,
**dadurch gekennzeichnet,**
**dass** das Verstärkungsrohr (22) und die Strebe (26) im Übergangsbereich zwischen Dachsäulenabschnitt (20) und Wandsäulenabschnitt (18) durch eine Verstärkung (28) miteinander verbunden sind.

3. Karosseriesäule nach Anspruch 2,
**dadurch gekennzeichnet,**
**dass** die Verstärkung (28) zwei Verstärkungsschalen (30) umfasst, deren Enden formschlüssig mit dem Umfang des zugeordneten Rohrs (22,26) verbunden sind.

4. Karosseriesäule nach Anspruch 2,
**dadurch gekennzeichnet,**
**dass** die Strebe (26), das Verstärkungsrohr (22) und die Verstärkung (28) zu einer vormontierten Baueinheit miteinander verbunden sind.

5. Karosseriesäule nach Anspruch 1,
**dadurch gekennzeichnet,**
**dass** die Strebe (26) zwischen annähernd geraden Endbereichen leicht gekrümmt verläuft.

6. Karosseriesäule nach Anspruch 1,
**dadurch gekennzeichnet,**
**dass** die Strebe (26) im Überdeckungsbereich mit der Verstärkung (28) gekrümmt ist.

7. Karosseriesäule nach Anspruch 1,
**dadurch gekennzeichnet,**
**dass** die Karosseriesäule die A-Säule (15) eines offenen Kraftwagens ist.

8. Karosseriesäule nach Anspruch 1,
**dadurch gekennzeichnet,**
**dass** das Verstärkungsrohr (22) und die Strebe (26) jeweils aus einem hochfesten Stahlrohr bestehen.

9. Karosseriesäule nach Anspruch 1,
**dadurch gekennzeichnet,**
**dass** das Verstärkungsrohr (22), die Strebe (26) und die Verstärkung (28) ein dreieckförmiges Stabwerk bilden.

10. Karosseriesäule nach Anspruch 1,
**dadurch gekennzeichnet,**
**dass** sich das Verstärkungsrohr (22) bis an die vordere Wand (24) des Wandsäulenabschnitts (18) und die Strebe (26) bis in den Bereich der Säulenwurzel (14) der Karosseriesäule (15) erstrecken.
